Europäisches Patentamt

European Patent Office

Office européen des brevets

(19)

(11) Veröffentlichungsnummer: **0 313 717 B1**

(12) **EUROPÄISCHE PATENTSCHRIFT**

(45) Veröffentlichungstag der Patentschrift:
**12.12.90**

(51) Int. Cl.⁵: **F16K 5/06, F16K 27/06**

(21) Anmeldenummer: **88103476.3**

(22) Anmeldetag: **05.03.88**

(54) **Absperrhahn für eine Rohrleitung.**

(30) Priorität: **29.10.87 DE 8714385 U**

(43) Veröffentlichungstag der Anmeldung:
**03.05.89 Patentblatt 89/18**

(45) Bekanntmachung des Hinweises auf die Patenterteilung:
**12.12.90 Patentblatt 90/50**

(84) Benannte Vertragsstaaten:
**AT CH DE LI**

(56) Entgegenhaltungen:
**EP-A- 0 069 034**
**FR-A- 1 018 974**
**FR-A- 1 317 114**
**FR-A- 2 512 157**
**US-A- 3 717 323**
**US-A- 4 457 491**

(73) Patentinhaber: **Burger-Armaturen GmbH,
Binnerheide 32, D-5840 Schwerte(DE)**

(72) Erfinder: **Burger, Hermann-Heinz, Wandhofener
Strasse 86, D-5840 Schwerte(DE)**

(74) Vertreter: **Dörner, Lothar, Dipl.-Ing.,
Stresemannstrasse 15, D-5800 Hagen 1(DE)**

**Beschreibung**

Technisches Gebiet:

Die Erfindung betrifft einen Absperrhahn für eine Rohrleitung, insbesondere für den Bereich eines Hausanschlusses einer Rohrleitung, mit einem im wesentlichen hohlzylindrischen Gehäuse, an das im Innern ein zwei Anlageflächen aufweisender Druckring angeformt ist, mit je einem an jeder Stirnseite des Gehäuses anschließenden Anschlußstück, an dessen Stirnfläche ein Dichtungsring aus Graphit anliegt, der andererseits an einer der Anlagefläche anliegt, und mit einer Kugel, die von den Dichtungsringen um eine Querachse schwenkbar gehalten ist, die von einer das Gehäuse im Bereich des Druckringes durchsetzenden Bedienungsspindel bestimmt ist.

Stand der Technik:

Absperrhähne der vorgenannten Art sind bekannt (US-A 4 457 491; EP-A 0 096 034). Bei den bekannten Absperrhähnen hat jeder Dichtungsring aus Graphit im wesentlichen fünfeckigen Querschnitt und ist an vier Flächen mit einer Metallschicht belegt. Der Dichtungsring steht mit seiner größten Fläche entweder über die Stirnfläche des hohlzylindrischen Gehäuses vor oder liegt mit ihr in derselben Ebene. Die Anlagefläche des zugeordneten Anschlußstücks befindet sich folglich entweder im Abstand von der Stirnfläche des Gehäuses oder liegt an ihr an. Keines der Anschlußstücke greift in das Gehäuse, eine Ausführung, die allerdings bei Absperrhähnen anderer Ausgestaltung bekannt ist (US-A 3 717 323; FR-A 2 512 157).

Im Bereich von Hausanschlüssen für Gasleitungen, also auf der Gebäudeinnenseite hinter einer Mauerdurchführung, wird folgende Forderung erhoben: Auch bei zum Beispiel durch Feuereinwirkung bedingten hohen Temperaturen müssen die Anschlüsse so lange dicht bleiben, daß die nach den DVGW-Richtlinien zugelassenen Leckgasmengen nicht überschritten werden. Diese Forderung erfüllen die bekannten Absperrhähne nicht oder nur unzureichend.

Darstellung der Erfindung:

Die Erfindung bezweckt, einen Absperrhahn zu schaffen, der im Bereich des Hausanschlusses in die Gasleitung eingebaut wird und den DVGW-Richtlinien genügt. Ausgehend von der genannten Zweckbestimmung liegt der Erfindung die Aufgabe zugrunde, einen Absperrhahn für eine Rohrleitung zu schaffen, mit dessen Hilfe eine sichere Absperrung möglich ist; auch noch bei Feuereinwirkung über die vorgeschriebene Zeit hinaus. Gemäß der Erfindung wird diese Aufgabe dadurch gelöst, daß jedes Anschlußstück mit der den Dichtungsring abstützenden Anlagefläche in das Gehäuse eingebracht ist, daß die Anlageflächen des Druckrings zur Gehäuseachse schräg und konvergierend verlaufen und daß jeder Dichtungsring aus Graphit im Querschnitt im wesentlichen nach Art eines Dreiecks ausgebildet ist, dessen längere Seite an der Stirnfläche eines der Anschlußstücke, dessen eine kürzere Seite an einer der schrägen Anlageflächen und dessen andere kürzere Seite an der Kugel anliegt.

Bei der Erfindung sind die Dichtungsringe aus Graphit ohne Metallschicht ausgeführt. Sie liegen vollständig im Innern des Gehäuses. Mit ihrer größten Fläche sind sie an der zugeordneten Stirnfläche eines der Anschlußstücke abgestützt, mit einer kleineren Fläche an der Anlagefläche des Druckrings. Auf diese Weise ist eine sichere Halterung der Dichtungsringe aus Graphit in dem Absperrhahn gewährleistet. Die andere kleinere Fläche jedes Dichtungsrings liegt an der Kugel an. Eine zusätzliche Führung der Kugel ist nicht vorgesehen. Die Dichtwirkung ist bestmöglich. Die Graphitringe sind hochtemperaturbeständig. Sie gewährleisten, daß die beschriebene Dichtung auch beibehalten wird, - z.B. Leckgas nur in der zulässigen Menge durchtreten läßt - wenn im Bereich des Absperrhahns ein Feuer ausbricht.

Ausgestaltungen und Weiterbildungen der Erfindung sind in den Unteransprüchen angegeben.

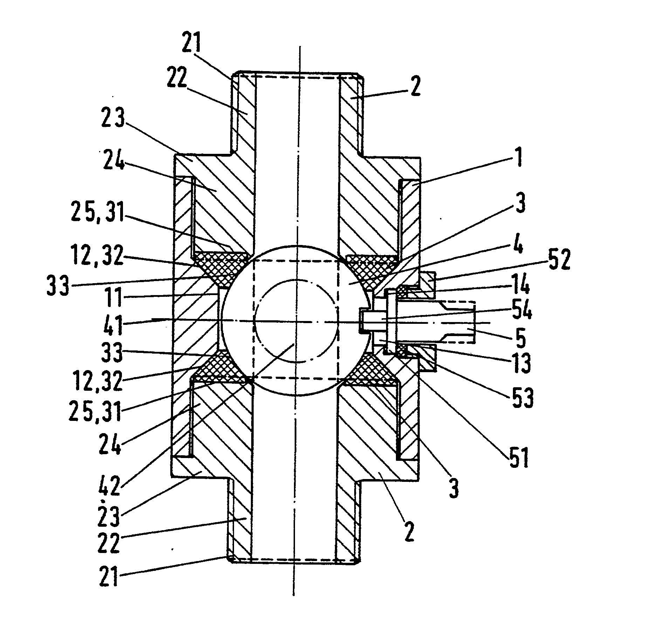

Kurze Beschreibung der Zeichnung:

Ein Ausführungsbeispiel der Erfindung ist in der Zeichnung dargestellt und wird im folgenden näher beschrieben. Die einzige Figur zeigt einen Längsschnitt durch einen Absperrhahn.

Bester Weg zur Ausführung der Erfindung:

Der als Ausführungsbeispiel gewählte Absperrhahn weist ein als Hohlzylinder ausgebildetes Gehäuse 1 auf. In das Gehäuse 1 ist von jeder Stirnseite ein Anschlußstück 2 eingebracht. An der inneren Stirnfläche jedes Anschlußstücks 2 liegt ein Dichtungsring 3 aus Graphit an. Zwischen den Dichtungsringen 3 ist eine Kugel 4 schwenkbar gehalten. Die Schwenkbewegung der Kugel 4 wird über einen Bedienungsvierkant 5 ausgelöst.

An das Gehäuse 1 ist im Innern ein Druckring 11 angeformt. Der Druckring 11 ist im wesentlichen mittig in dem Gehäuse 1 angeordnet. Der Druckring 11 weist zwei ringförmig angeordnete schräge Anlageflächen 12 auf. An den Anlageflächen 12 liegen die Dichtungsringe 3 an. Im Bereich des Druckrings 11 ist in dem Gehäuse 1 eine Querbohrung vorgesehen. Durch die Querbohrung 13 ist der Bedienungsvierkant 5 gesteckt.

Im Ausführungsbeispiel ist jedes Anschlußstück 2 im Bereich der äußeren Stirnseite mit einem Außengewinde 21 versehen. Mit Hilfe des Außengewinde 21 ist der Absperrhahn in eine Rohrleitung einschraubbar. An dem Gewindestutzen 22, der das Außengewinde 21 trägt, schließt nach innen ein Flansch 23 an, mit dem das Anschlußstück 2 an der Stirnseite des Gehäuses 1 anliegt. Auf der dem Gewindestutzen 22 abgewandten Seite des Flansches 23 ist das Anschlußstück 2 als Hohlzylinder 24 mit verstärkter Wandung ausgebildet. Mit Hilfe des Hohlzylinders 24 ist das Anschlußstück 2 an dem Gehäuse 1 befestigt. An der dem jeweils anderen Anschlußstück 2 zugewandten Stirnfläche 25 des Hohlzylinders 24 liegt jeweils einer der Dichtungsringe 3 an. Zur Verbesserung der Anlage kann in die Stirnfläche 25 eine Ringnut eingebracht sein. Jedes der Anschlußstücke 2 kann als Steck- oder Flanschverbindung, als mit Innen- oder Außengewinde versehener Stutzen oder als Anschweißstück ausgebildet sein.

Jeder Dichtungsring 3 aus Graphit ist im Querschnitt im wesentlichen nach Art eines Dreiecks ausgebildet. Die längere Seite 31 des Dichtungsrings 3 liegt an der Stirnfläche 25 des Anschlußstücks 2 an. Eine kürzere Seite 32 des Dichtungsrings 3 liegt an einer der Anlageflächen 12 des Gehäuses an. Die zweite kürzere Seite des Dichtungsrings 3 liegt an der Kugel 4 an.

Die Kugel 4 ist zwischen den Dichtungsringen 3 um eine Querachse 41 schwenkbar gelagert. Die Kugel 4 ist mit einer Bohrung 42 versehen, die in Abhängigkeit von der Stellung des Bedienungsvierkants 5 entweder mit den Bohrungen der Anschlußstücke 2 fluchtet oder gegenüber diesen Bohrungen mit 90° geschwenkt ist. In der Zeichnung ist die Durchgangsstellung des Absperrhahns dargestellt, bei dem die Bohrung 42 mit den Bohrungen in den Anschlußstücken 2 fluchtet; die dazu um 90° gedrehte Stellung ist strichpunktiert eingezeichnet. Die Kugel 4 liegt an der zweiten kürzeren Seite 33 der Dichtungsringe 3 an.

Der Bedienungsvierkant 5 ist mit einem Flansch 51 in einer Schulter 14 in der Querbohrung 13 im Gehäuse 1 abgestützt. Der Bedienungsvierkant 5 ist mittels eines von dem Bedienungsvierkant durchsetzten Stopfens 52 gehalten. Zwischen Stopfen 52 und Flansch 51 ist ein Dichtungsring 53 vorgesehen. Das innere Ende 54 des Bedienungsvierkants 5 greift in eine Ausnehmung der Kugel 4 ein, die in der Querachse 41 vorgesehen ist. Durch Angriff eines nicht dargestellten Werkzeugs am äußeren freien Ende des Bedienungsvierkants 5, welches als Angriffszapfen 55 ausgebildet ist, dreht die Kugel 4 in eine ihrer beiden Betriebsstellungen. Es ist möglich, zwei um 90° gegeneinander versetzte Stellungen durch einen Anschlag zu begrenzen.

## Patentansprüche

1. Absperrhahn für eine Rohrleitung, insbesondere für den Bereich eines Hausanschlusses einer Rohrleitung, mit einem im wesentlichen hohlzylindrischen Gehäuse (1), an das im Innern ein zwei Anlageflächen (12) aufweisender Druckring (11) angeformt ist, mit je einem an jeder Stirnseite des Gehäuses (1) anschließenden Anschlußstück (2), an dessen Stirnfläche (25) ein Dichtungsring (3) aus Graphit anliegt, der andererseits an einer der Anlagefläche (12) anliegt, und mit einer Kugel (4), die von den Dichtungsringen (3) um eine Querachse (41) schwenkbar gehalten ist, die von einer das Gehäuse (1) im Bereich des Druckrings (11) durchsetzenden Bedienungsspindel bestimmt ist, dadurch gekennzeichnet, daß jedes Anschlußstück (2) mit der den Dichtungsring abstützenden Anlagefläche in das Gehäuse (1) eingebracht ist, daß die Anlageflächen (12) des Druckrings zur Gehäuseachse schräg und konvergierend verlaufen und daß jeder Dichtungsring (3) aus Graphit im Querschnitt im wesentlichen nach Art eines Dreiecks ausgebildet ist, dessen längere Seite (31) an der Stirnfläche (25) eines der Anschlußstücke (2), dessen eine kürzere Seite (32) an einer der schrägen Anlageflächen (12) und dessen andere kürzere Seite (33) an der Kugel (4) anliegt.

2. Absperrhahn nach Anspruch 1, dadurch gekennzeichnet, daß jedes Anschlußstück (2) im Bereich der äußeren Stirnseite mit einem Gewindestutzen (22) für den Anschluß des Absperrhahns an einer Rohrleitung versehen ist, an den nach innen ein Flansch (23) anschließt, mit dem das Anschlußstück (2) an der Stirnseite des Gehäuses (1) anliegt.

3 . Absperrhahn nach Anspruch 2, dadurch gekennzeichnet , daß das Anschlußstück (2) auf der dem Gewindestutzen (22) abgewandten Seite des Flansches (23) als Hohlzylinder (24) mit verstärkter Wandung ausgebildet ist, mit dessen Hilfe das Anschlußstück (2) an dem Gehäuse (1) befestigt ist.

4. Absperrhahn nach einem der Ansprüche 1 bis 3, dadurch gekennzeichnet, daß die Querachse von einem Bedienungsvierkant (5) bestimmt ist, der mit einem Flansch (51) an einer Schulter (14) einer Querbohrung (13) im Gehäuse (1) abgestützt und mittels eines von dem Bedienungsvierkant (5) durchsetzten Stopfens (52) gehalten ist.

## Claims

1. Stopcock for a pipe, in particular for the area of a pipe in which a house connection is situated, with a mainly hollow cylindrical housing (1) the interior of which is provided with a sealing ring (11) with two contact surfaces (12) and with one connecting piece (2) connecting with each front of the housing (1), the forepart of which is in contact with a graphite sealing ring (3) which in turn contacts one of the contact surfaces (12) and with a ball (4) which is held by the sealing ring (3) in a swivelling position around a transverse axis (41) which is determined by an operating spindle passing through the housing (1) in the area of the pressure ring (11), characterized by the fact that each connecting piece (2) is mounted in the housing (1) with the contact gurface which supports the sealing ring, that the contact surfaces (12) of the pressure ring run in a converging direction diagonally to the axes of the housing, and that the cross-section of each graphite sealing ring (3) is broadly in form of a triangle, the longer side of which (31) contacts the front surface (25) of one of the connecting pieces (2), one of the shorter sides (32) of which contacts one of the diagonal contact surfaces (12) and the other shorter side (33) of which is in contact with the ball (4).

2. Stop cock in accordance with claim no. 1, characterized by the fact that each connecting piece (2) is provided with a screw neck (22) in the area of the outer front side, for the purpose of connecting the stopcock to a pipe, which is met on the inside by a flange (23) with which the connecting piece (2) contacts the front side of the housing (1).

3. Stop cock in accordance with claim no. 2, characterized by the fact that the connecting piece (2) has the form of a hollow cylinder with a strengthened wall on the gide of the flange (23) facing away from the screw neck (22), with the assistance of which the connecting piece (2) is attached to the housing (1).

4. Stop cock in accordance with claims 1 – 3, characterized by the fact that the transverse axis is determined by a square operating pin (5) which is supported by means of a flange (51) on the shoulder of a transverse bore (13) in the housing (1) and held in position by a plug (52) through which the square pin (5) passes.

**Revendications**

1. Vanne pour un tuyau, installable en particulier au point de branchement d'une conduite d'une maison, composée essentiellement d'un corps cylindrique creux (1), contre l'intérieur duquel s'applique sur deux surfaces d'appui (12) un anneau de compression (11), avec deux pièces de raccordement (2) emboîtées dans le corps de vanne (1) et jointives de chacune de ses côtés frontaux, contre les faces frontales (25) desquelles (2) s'applique une bague d'étanchéité (3) en graphite, laquelle s'appuie d'autre part contre une surface d'appui (12), et composée d'une bille (4) retenue par les bagues d'étanchéité (3) tout en pouvant pivoter selon un axe transversal (41) déterminé par une broche de commande traversant le corps de vanne (1) au niveau de la bague de compression (11), caractérisée en ce que chaque pièce de raccordement (2) est logée dans le corps de vanne (1) avec la surface d'appui soutenant chaque bague d'étanchéité (3), en ce que les surfaces d'appui (12) de la bague de compression sont inclinées et convergent vers le corps de vanne et en ce que chaque bague d'étanchéité (3) en graphite a, vue en coupe, la forme d'un triangle dont l'hypoténuse (31) s'applique contre la face frontale (25) de l'une des pièces de raccordement (2), dont l'un des deux autres côtés s'applique contre l'une des surfaces d'appui inclinées (12) et dont le troisième côté (33) s'applique contre la bille (4)

2. Vanne pour un tuyau selon revendication 1, caractérisée en ce que chaque pièce de raccordement est équipée d'un manchon fileté (22) au niveau extérieur du côté frontal, permettant de raccorder la vanne à une conduite, orifice se poursuivant, dans le sens de pénétration dans la vanne, par un flasque (23) par lequel la pièce de raccordement (2) s'applique contre le côté frontal (1) du corps de vanne.

3. Vanne pour un tuyau selon revendication 2, caractérisée en ce que la pièce de raccordement (2) a la forme d'un cylindre creux (24), à parois renforcées, du côté du flasque (23) opposé au manchon fileté (2), cylindre par lequel la pièce de raccordement (2) est fixée dans le corps de vanne (1).

4. Vanne pour tuyau selon l'une des revendications 1 à 3, caractérisée en ce que l'axe transversal est déterminé par une broche quadrangulaire de commande (5) s'appuyant par un flasque (51) sur un épaulement (14) d'un alésage transversal (13) dans le corps de vanne (1) et qu'il est retenu par un bouchon (52) traversé par la broche quadrangulaire de commande (5).